# EUROPEAN PATENT SPECIFICATION

(11) **EP 0 725 952 B1**
(45) Date of publication and mention of the grant of the patent: **31.10.2001**
(21) Application number: 95929656.7
(22) Date of filing: 25.08.1995
(51) Int. Cl.: G06F 12/08, G06T 1/60, G06T 3/40

(54) **DATA REPRESENTATION AND ACCESS METHOD**
DATENDARSTELLUNG UND ZUGRIFFSVERFAHREN
PROCEDE DE REPRESENTATION ET D'ACCES CONCERNANT DES DONNEES

(30) Priority: 25.08.1994 AU PM768794
(43) Date of publication of application: 14.08.1996
(73) Proprietor: Wright Technologies Pty. Ltd., Leichhardt, NSW 2040 (AU)
(72) Inventor: MICHIE, David, Charles, Manly, NSW 2095 (AU)
(74) Representative: Suckling, Andrew Michael
(86) International application number: AU9500537
(87) International publication number: WO9606395

(56) References cited:
- EP-A- 0 370 654
- WO-A-90/15379
- WO-A-91/07061
- WO-A-94/10633
- WO-A-94/24633
- FR-A- 2 700 036
- PROCEEDINGS OF THE SPIE, vol. 1460, 1 January 1991, pages 80-91, XP000568531 ISAACSON J S: "FAST ACCESS TO REDUCED RESOLUTION SUBSAMPLES OF HIGH RESOLUTION IMAGES"
- IEEE TRANSACTIONS ON COMMUNICATIONS, vol. COM 31, no. 4, 1 April 1983, pages 532-540, XP000570701 BURT P J ET AL: "THE LAPLACIAN PYRAMID AS A COMPACT IMAGE CODE"
- SIGGRAPH 94: CONFERENCE PROCEEDINGS, 24-29 July 1994, (Computer Graphics Proceedings Annual Conference Series, 1994), pp. 147-154, "A Model for Efficient and Flexible Image Computing", MICHAEL A. SHANTZIS.

## Description

### Field of the Invention

The present invention relates to the representation and access of data and, in particular, to the representation and access of graphical image data.

### Background Art

Conventional techniques of storing image data, and other data which can be perceived as having an array format, fall into two basic categories known as sequential format and tiled format.

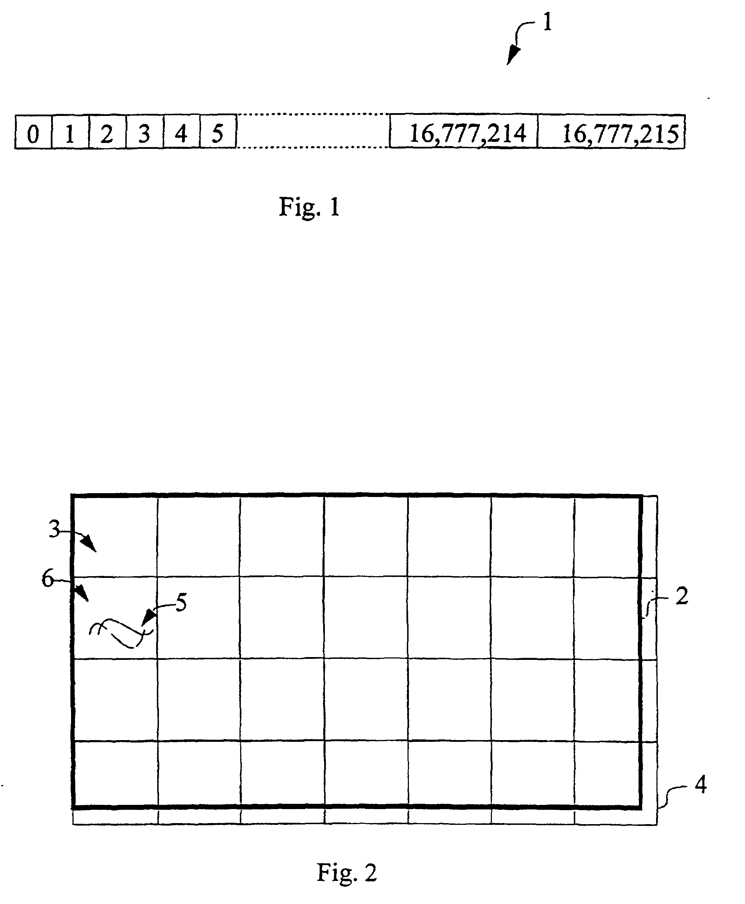

Data, such as images, which is stored in a sequential format is normally divided into horizontal "scan lines". Each scan line can contain a row of data, which in the case of images will consist of pixels that are traditionally stored from left to right. It will be apparent to a person skilled in the art that the scan lines could also consist of columns of data, generally from top to bottom of the image. Other forms of scan line storage are possible, such as grouping a number of rows or scan lines of data together into "strips". As an example, photographic scanning devices traditionally scan an image in a sequential format. Fig. 1 illustrates this conventional format where an image that has 4,096 x 4,096 pixels, for example, is stored in a sequential format from pixel number 0 to pixel number 16,777,215.

Referring now to Fig. 2, a second conventional storage format for an image is the "tiled" format. In this format, the image or data 2, which is made up of a large array of pixels, is "tiled" by a series of equally sized rectangles or square tiles 3. Each tile 3 is considered to be a "sub-image", with the pixels of each tile stored in a sequential manner as shown in Fig. 1. Often the size of a tile is chosen to be a power of 2 (for example, 128 x 128 pixels or 256 x 256 pixels). This generally allows calculations, such as division calculations which are required to split up the image or data into its corresponding tiles, to be computed more efficiently. If the image size is not an exact multiple of the tile size, some of the tiles allocated, for example tile 4, will then store only part of an image, with that portion of the tile lying outside the bounds of the image being wasted storage.

A tiled image format is particularly advantageous when it is desired to only access a small portion of the image or data. If the image 2 is stored on secondary storage media and has to be loaded into a computer system, to access a small portion of the image (e.g., portion 5), only the tile 6 need be loaded from secondary storage.

Modern virtual memory operating systems, for example UNIX, Windows NT, Windows 95 (Registered Trade Marks), divide up their various storage media, such as hard disks, into blocks called "pages". Such operating systems are known as paged memory architectures. For a thorough discussion of such architectures, reference is made to a standard text such as Computer Architecture: A Quantitative Approach, written by Hennessy and Patterson, and published in 1990 by Morgan Kaufmann Publishers Inc. and, in particular, to chapters 8 and 9 thereof.

In a paged memory architecture, when an application program attempts to access a portion of memory that is stored on a hard disk or external storage device, the operating system will determine on which "page" the byte resides and load the whole page from disk into memory. Typically, the size of pages is a variable operating system parameter, with a common size being 4 kilobytes (4,096 bytes). Hard-disk devices typically take of the order of a few tens of milliseconds to access any part of their stored data. This is to be compared with a memory cycle time of modern computers which is typically in the low tens of nanoseconds. Therefore, there is a large disparity between the time taken in accessing data from hard disk in comparison with accessing data from memory. This disparity is approximately three orders of magnitude.

Although it may take tens of milliseconds for a disk drive to access its first byte of requested data, subsequent bytes, which are stored sequentially after a first byte, can often be accessed substantially more rapidly. Therefore, operating systems conventionally load a whole "block" or page of data from the hard disk at a time in the hope that, on the principle of locality, bytes surrounding a predetermined byte will also be required by an application program. This principle is normally quite effective in practice. However, the use of the paged memory model in image or data processing programs that use sequential or tiled data can cause significant problems.

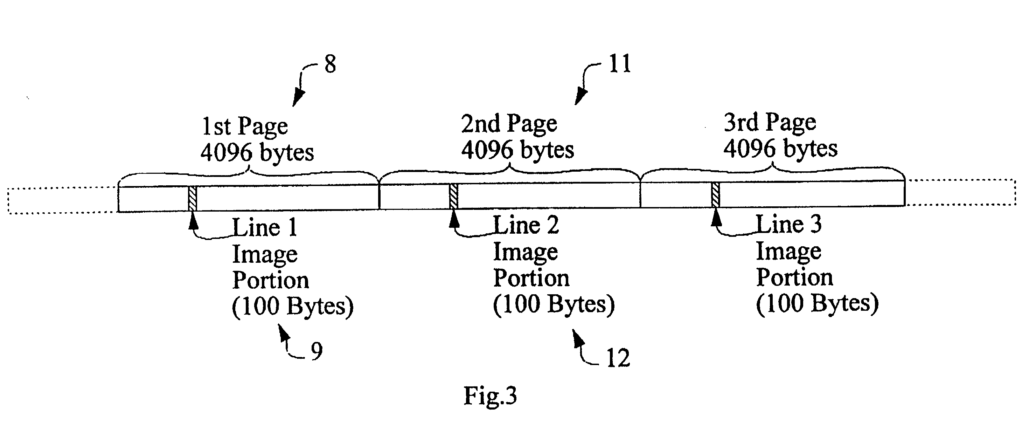

In a first example of one of these problems, it will be assumed that each image or data element or pixel requires one byte of storage. This would be a common scenario for example in grey scale images, with each pixel being able to take one of 256 levels. Turning now to Fig. 3, if it is desired, by an application program, to load a small rectangular portion of 100 pixels by 100 pixels, for example, of a very large image which has been stored in the sequential format, the application program can do this by reading 100 pixels from each of the 100 relevant scan lines required. Hence, the total number of bytes read by the application program will be 100 x 100 = 10,000 bytes. However, because the operating system only reads data from a disk storage device by means of page-sized portions, comprising 4,096 bytes, for example, the operating system begins by reading a first page 8 having 4,096 bytes and from the first page it extracts those 100 bytes 9 which form part of the first scan line that is required. Subsequently, the second page 11 is read in and 100 bytes from the second line is extracted. This process is continued for each of the 100 lines.

From Fig. 3, it can be seen that to read and extract the 10,000 bytes comprising 100 pixels from 100 relevant scan lines, the operating system is required to read in a total of 409,600 bytes which is over 40 times more data than is actually required. This makes the above operation very time consuming.

In a second example of the problems associated with the paged memory model, it is desired by an application program to reduce the size of a very large tiled image to one sixteenth of its original size. This is a common operation utilised by image processing programs that work by means of proxy images which are displayed and manipulated on screen. The image processing program reduces the image size by means of sub sampling. For example, in the present case, sub sampling can be achieved by reading every fourth pixel in a horizontal and vertical direction and displaying the pixels forming the new images on a display. The new image will be a quarter of the size in both the horizontal and vertical directions or one sixteenth the total area of the original very large image.

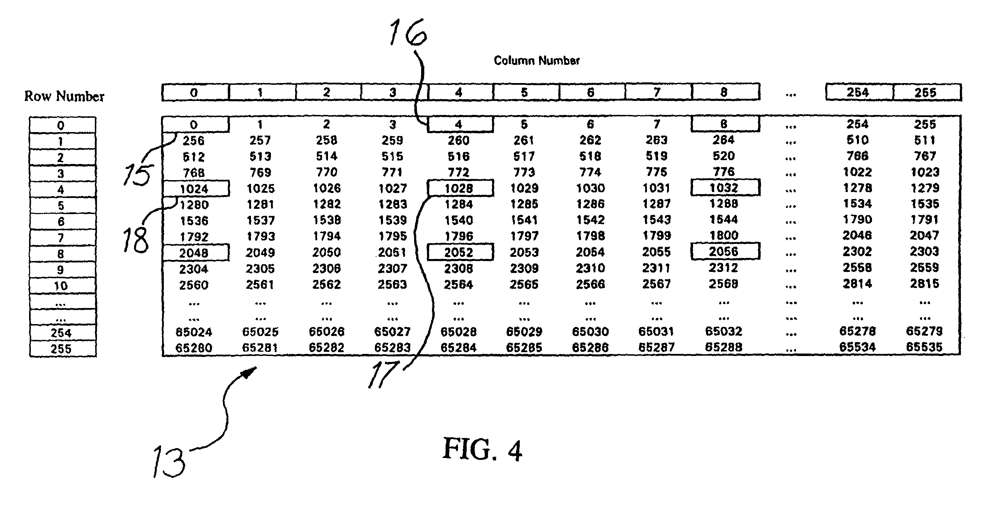

Referring now to Fig. 4, there is shown a tile 13 containing 256 x 256 pixels numbered 0 to 65,535, with the pixels being stored in scan line, row or numerical order. In desiring to form a sub-sampled image, every fourth pixel (e.g., 15 to 18) in the vertical and horizontal directions is sampled to form the new image. As each sampled pixel in the vertical direction is 4 x 256 = 1,024 bytes apart, no pages within a tile can be skipped and, in order to form the sub-sampled image, the operating system must load every page in the tile, for each tile of the image. Hence, the operating system will load sixteen times more data than is required which again is a time consuming operation.

### Brief Description of the Drawings

Embodiments of the invention will now be described with reference to the following drawings, in which:
Fig. 1 illustrates a conventional "scan line" form of representation of data;
Fig. 2 illustrates the conventional process of "tiling" an image;
Fig. 3 illustrates a conventional arrangement of pixels when a tile form of arrangement is stored;
Fig. 4 illustrates the layout of a tile as used with the prior art;
Fig. 5 is a diagram illustrating a method of providing a tile layout according to a preferred embodiment of the invention;
Fig. 6 is a flow diagram of the method according to the preferred embodiment;
Fig. 7 is a flow diagram illustrating step 602 of Fig. 6 in greater detail; and
Fig. 8 is a flow diagram illustrating step 604 of Fig. 6 in greater detail.

### Summary of the Invention

It is an object of the present invention to provide an alternative data format which is more efficient for at least one class of data retrieval operations.

In accordance with a first aspect of the present invention there is provided a method of recording an array of data in a paged memory system, said array of data arranged as a plurality of tiles, each tile of said plurality of tiles consisting of 2^{M} x 2^{M} data values, M being a positive integer, and each data value therein represented by a pair of index co-ordinates, characterized in that said method comprises the steps of for each tile of said plurality of tiles, sub-sampling said data values of said each tile in increasing granularity comprising the further steps of: determining a first set of data values having index pairs, wherein both indices of an index pair of each data value are multiples of 2^{M-1}; determining a plurality of sets of data values wherein each set is determined so that the respective set consists of data values having index pairs, wherein both indices are multiples of 2^{M-N-1}, but are not both multiples of 2^{M-N}, N being a positive integer, wherein said plurality of sets are arranged to having increasing granularity according to N equal to 1 to M-1, respectively; and storing said each tile of said plurality of tiles as one or more pages, wherein each page consists of a number of sequential rows of said each tile.

### Detailed Description

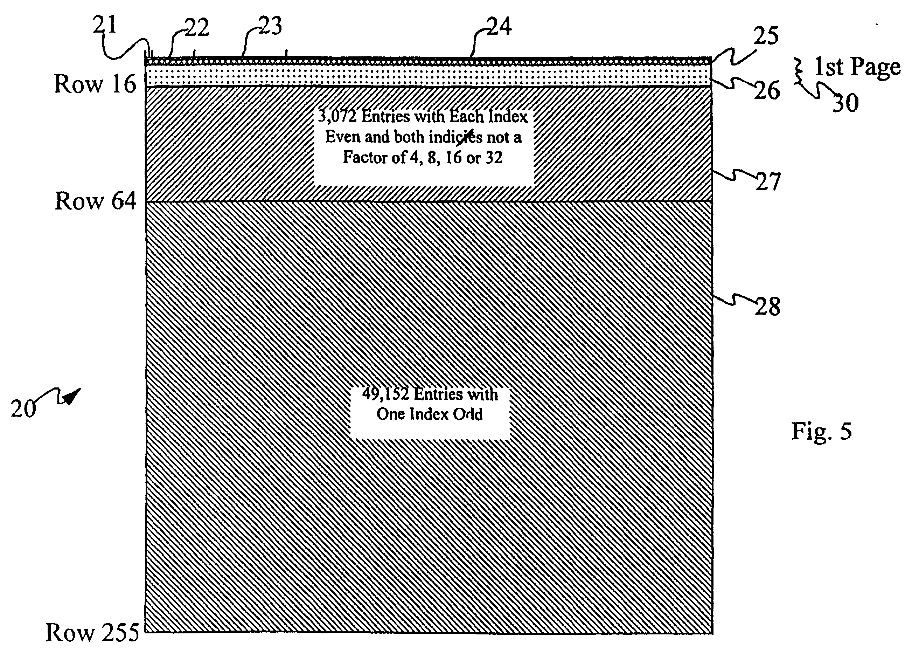

The preferred embodiment of the present invention will now be described with reference to accompanying Figs. 5 to 8 which illustrate the process of providing a tile layout according to the preferred embodiment which seeks to overcome disadvantages of the prior art

In the preferred embodiment, the image or data is again stored in a tiled format which has the advantage of allowing access to small portions of an image without requiring the loading of the whole image data.

Referring now to Fig. 5, in the preferred embodiment, the pixels or data within a single tile 20 are arranged in a non-monotonic manner. Each tile has, for example, 256 x 256 = 65,536 pixels and each pixel can be denoted by the position (xpos, ypos), with xpos and ypos having ranges from 0 to 255. The pixels of each tile are stored sequentially in the following manner:
1. The first four entries 21 are those pixels having address indices xpos, ypos which are both multiples of 128. This corresponds to pixels: (0,0), (128,0), (0,128) and (128,128).
2. The next twelve entries 22 are those pixels having address indices which are both multiples of 64, but are not both multiples of 128. This corresponds to pixels: (64,0), (192,0), (0,64), (64,64), (128,64), (192,64), (64,128), (192,128), (0,192), (64,192), (128,192), (192,192).
3. The next 48 entries 23 are those pixels having address indices which are both multiples of 32, but are not both multiples of 64.
4. The next 192 entries 24 are those pixels having address indices which are both multiples of 16, but are not both multiples of 32.
5. The next 768 entries 25 are those pixels having address indices which are both multiples of 8, but are not both multiples of 16.
6. The next 3,072 entries 26 are those pixels having address indices which are both multiples of 4, but are not both multiples of 8.
7. The next 12,288 entries 27 are those pixels having address indices which are both multiples of 2, but are not both multiples of 4.
8. The final 49,152 entries 28 are those pixels having address indices which are both multiples of 1, but are not both multiples of 2.

Although the pixels are shown in Fig. 5 in a two dimensional format, the pixels are actually stored in a one dimensional format in row order. Additionally, it should be noted that the pixels which have address indices which are both common multiples of 64 and 128, for example, appear only once in the area of the greater common divisor (in this case, the greater common divisor is 128).

If the size of a single page is considered to be 4 kilobytes (4,096 bytes), each page will store 16 rows of the tile 20. Therefore, by reading in the first page 30, all those pixels 21 to 26 spaced four pixels apart in the horizontal and vertical directions will be read from disk storage. This can lead to substantial increases in efficiency of utilisation of a standard computer system. Similarly, the first four pages, will include pixels 21 to 27, which contain all those pixels having locations that are multiples of 2 in the horizontal and vertical directions.

The present application also includes two appendices. The first appendix A contains a print out of one form of the reordering of the pixel positions of Fig. 4 for the tile of Fig. 5. Appendix B contains a C++ code listing utilised in generating the print out of Appendix A. Appendices A and B are provided to assist an operating systems programmer in implementing the access method of the preferred embodiment.

For example, the principles outlined in the preferred embodiment can be readily extended to other forms of data representation, wherein the data is represented in a form of an array format and it is desired to obtain a sub sampled portion of that array. For example, in full coloured, 32 bit, 4 channel, CMYK colour data, which is often used in the art of computer graphics, the present invention could be readily applied by treating each separate colour channel as a separate image. Alternatively, each colour channel can be 4-way interleaved, further reducing the number of pages which must be read in when it is desired to display a sub-sampled portion of each tile.

Additionally, those skilled in the art would readily recognise that the present invention has application beyond merely byte-oriented data and can extend to other forms of array data such as array record structures.

Additionally, those skilled in the art would readily recognise that the present invention is not restricted to a paged memory architecture and can readily be used in operating systems which access a form of secondary storage media which is slower than the primary storage media utilised by the operating system and is particularly applicable when the secondary storage media is traditionally accessed via block access techniques.

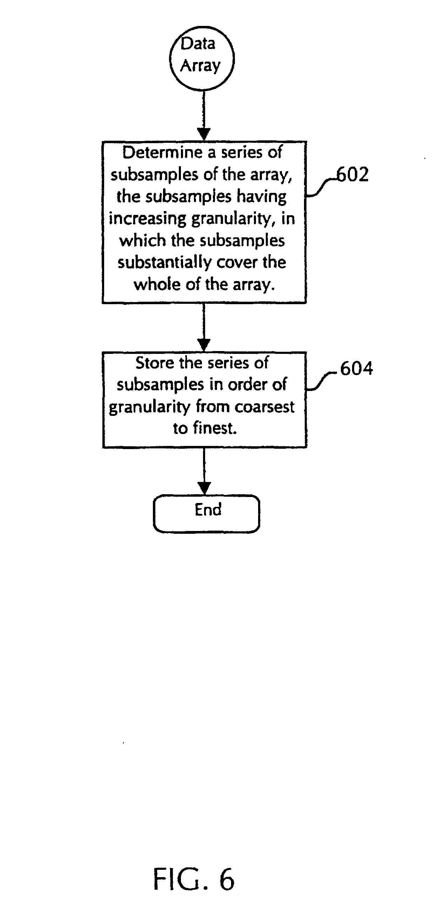

Fig. 6 is a flow diagram illustrating the process of storing an array of data (e.g., image) in tiled format according to the preferred embodiment. A data array is provided which consists of the input data to be processed. In step 602, a series of sub-samples of the array are determined in which the sub-samples have increasingly fine granularity. The collection of the series of sub-samples substantially covers the whole of the data array. In step 604, the series of sub-samples are stored in order of granularity from the coarsest granularity to the finest granularity such that, in reading out the stored data, only the corresponding sub-samples need be read out.

Each element of the data array is present in only one of the series of sub-samples. The array of data forms a tile which is an element of a larger array of tiles.

Preferably, step 604 further comprises storing the series of sub-samples on a secondary storage device. The secondary storage device can be a disc storage device which is accessed by means of block transfers.

Preferably, the array of data is stored on a virtual memory computer system. Still further, the array of data can be stored on a paged memory computer system.

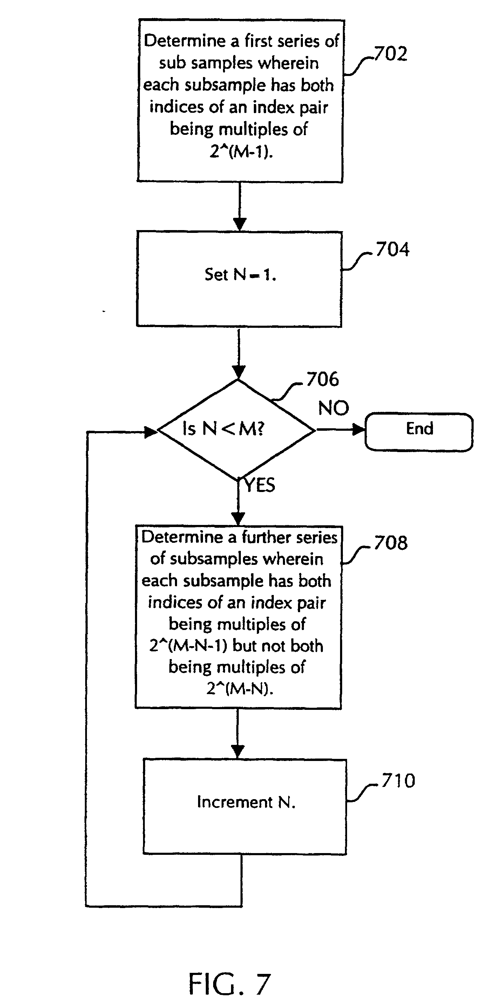

Fig. 7 is a flow diagram illustrating step 602 of Fig. 6 in greater detail. In step 702, a first series of sub-samples is determined in which each sub-sample has both indices of an index pair being multiples of 2^{M-1}, where M is a positive integer. Each array of data preferably consists of a number of tiles in which each tile consists of 2^{M} X 2^{M} data values. This is the series of sub-samples having the coarsest granularity. In step 704, the variable N is set equal to 1.

In decision block 706, a check is made to determine if N is less than M. When decision block 706 returns false (NO), processing terminates. Otherwise, when decision block 706 returns true (YES), the processing continues at step 708. In step 708, a further series of sub-samples is determined in which each sub-sample has both indices of an index pair being multiples of 2^{M-N-1} but not both being multiples of 2^{M-N}. In step 710, the value of N is incremented. Processing continues at decision block 706. In this manner, a collection of series of subsamples are obtained of increasingly finer granularity until all data values of the array of data have been processed.

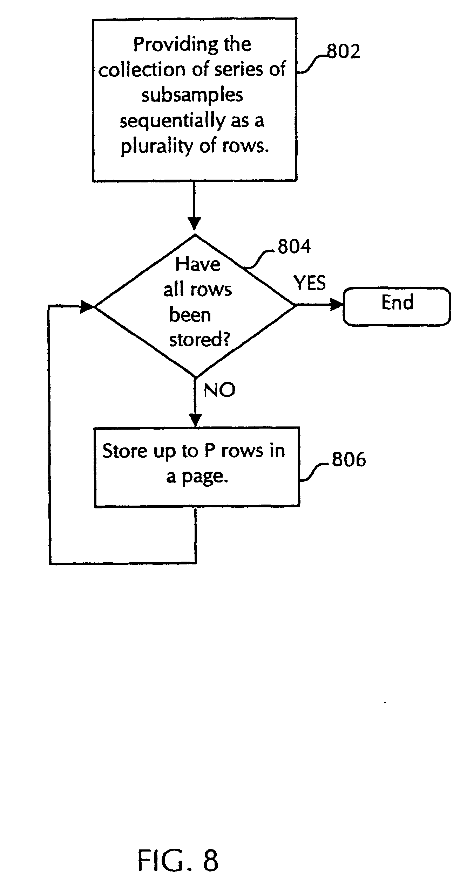

Fig. 8 is a flow diagram illustrating step 604 of Fig. 6 in greater detail. In step 802, the collection of series of sub-samples are provided sequentially as a plurality of rows. In decision block 804, a check is made to determine if all rows have been stored. When decision block 804 returns true (YES), processing terminates. Otherwise, if decision block 804 returns false (NO), processing continues at step 806. In step 806, up to P rows are stored in a page, where P is dependent on the size of each page.

The foregoing describes only one embodiment of the present invention, modifications, obvious to those skilled in the art can be made thereto without departing from the scope of the invention as claimed.

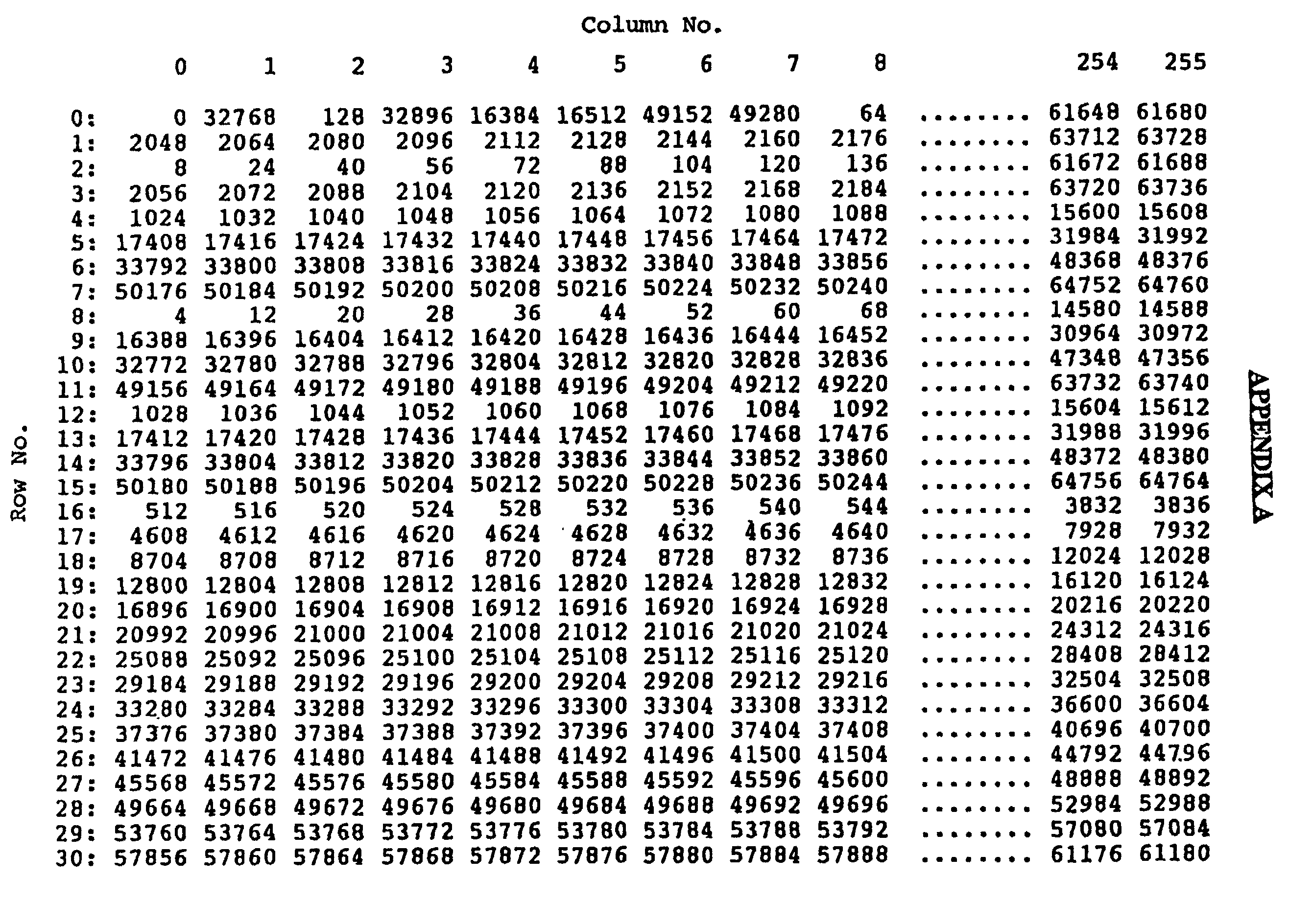

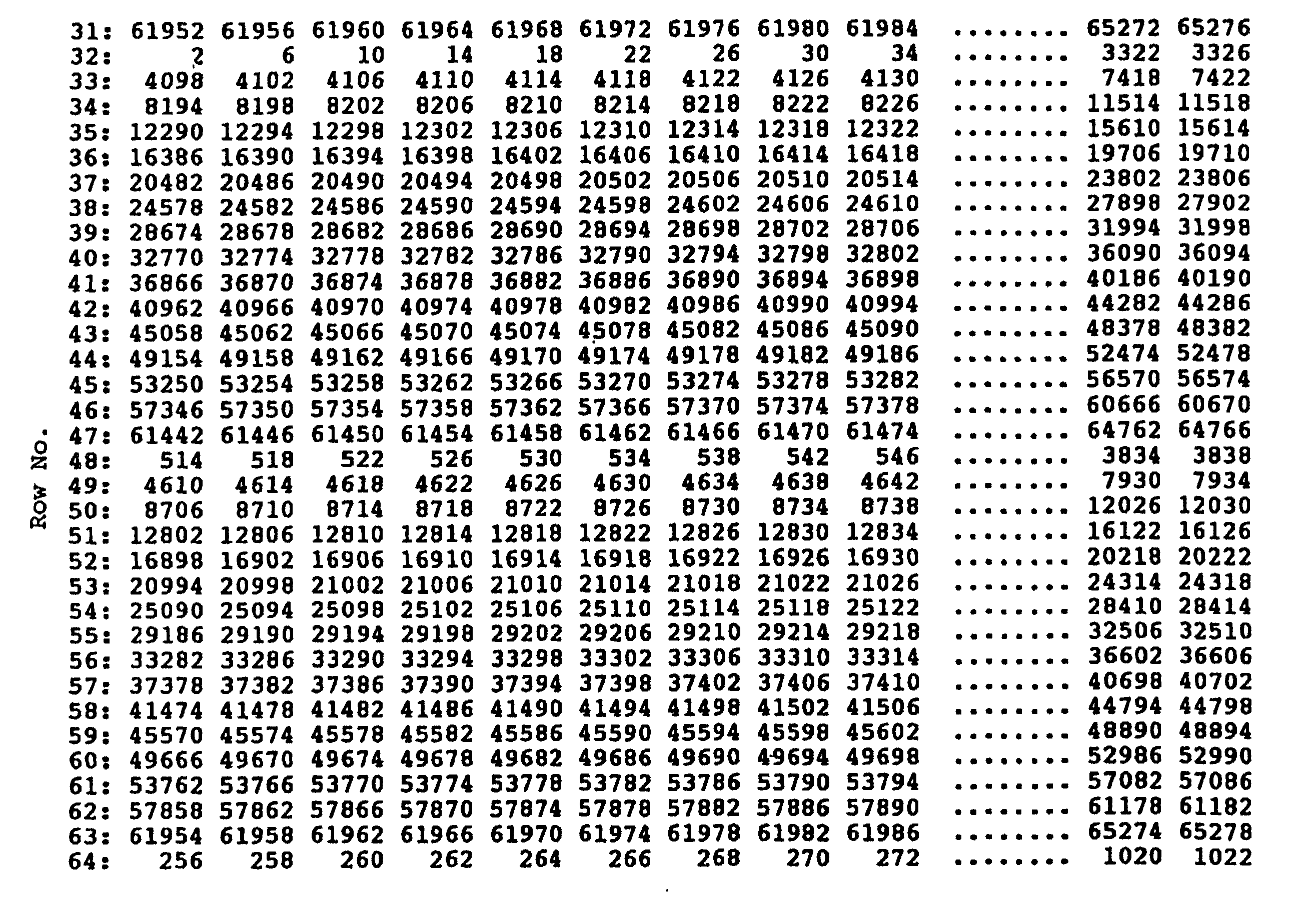

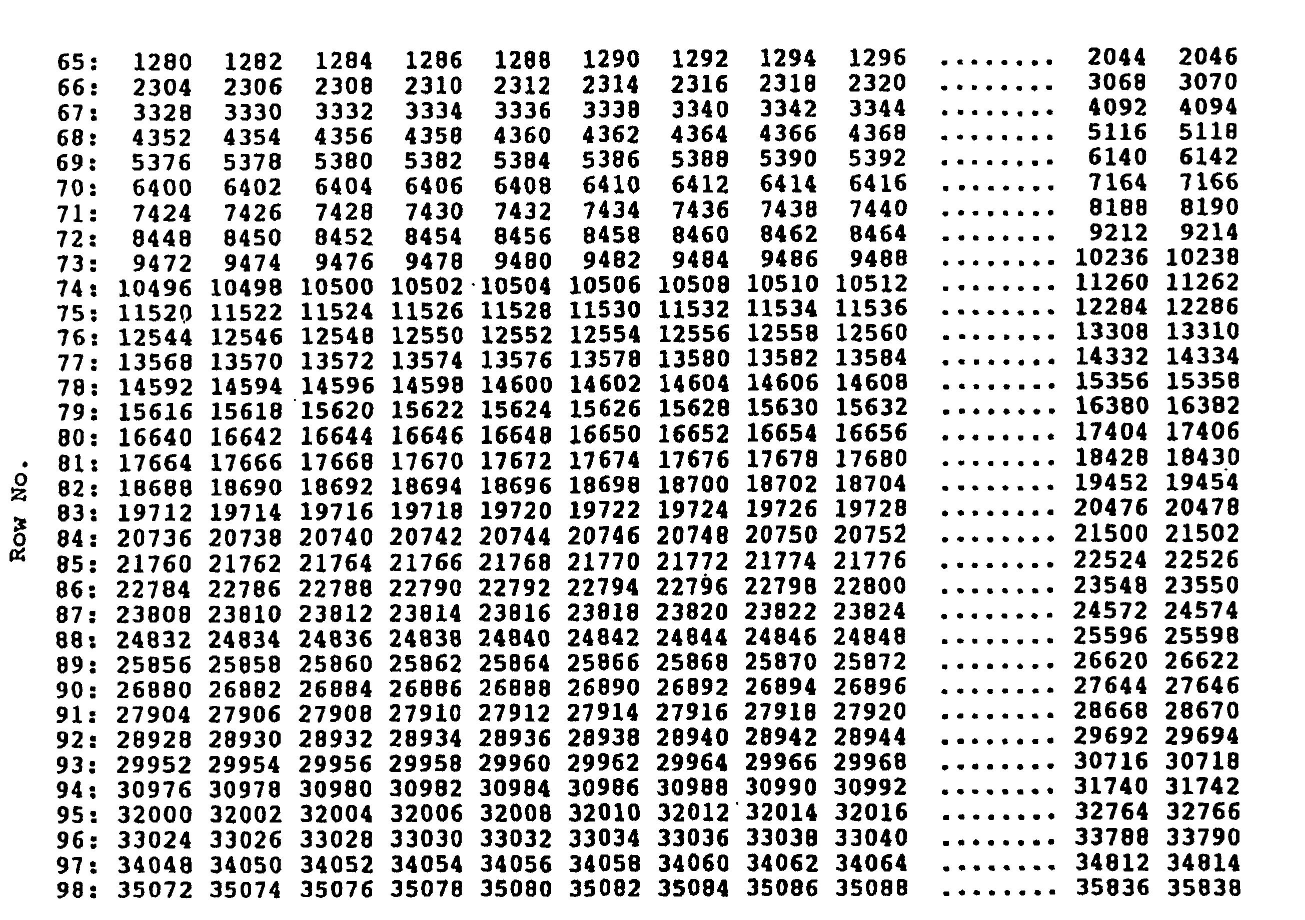

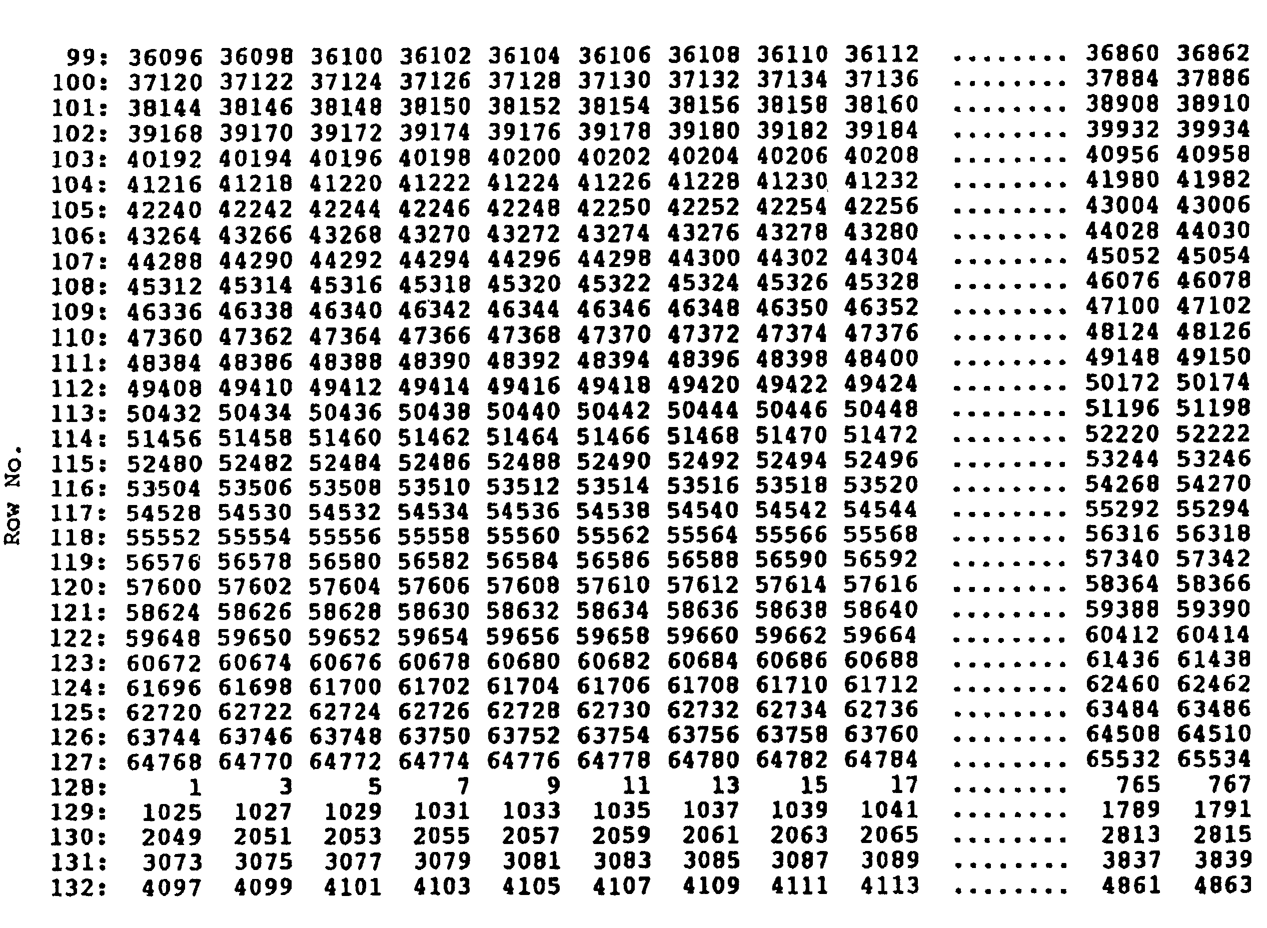

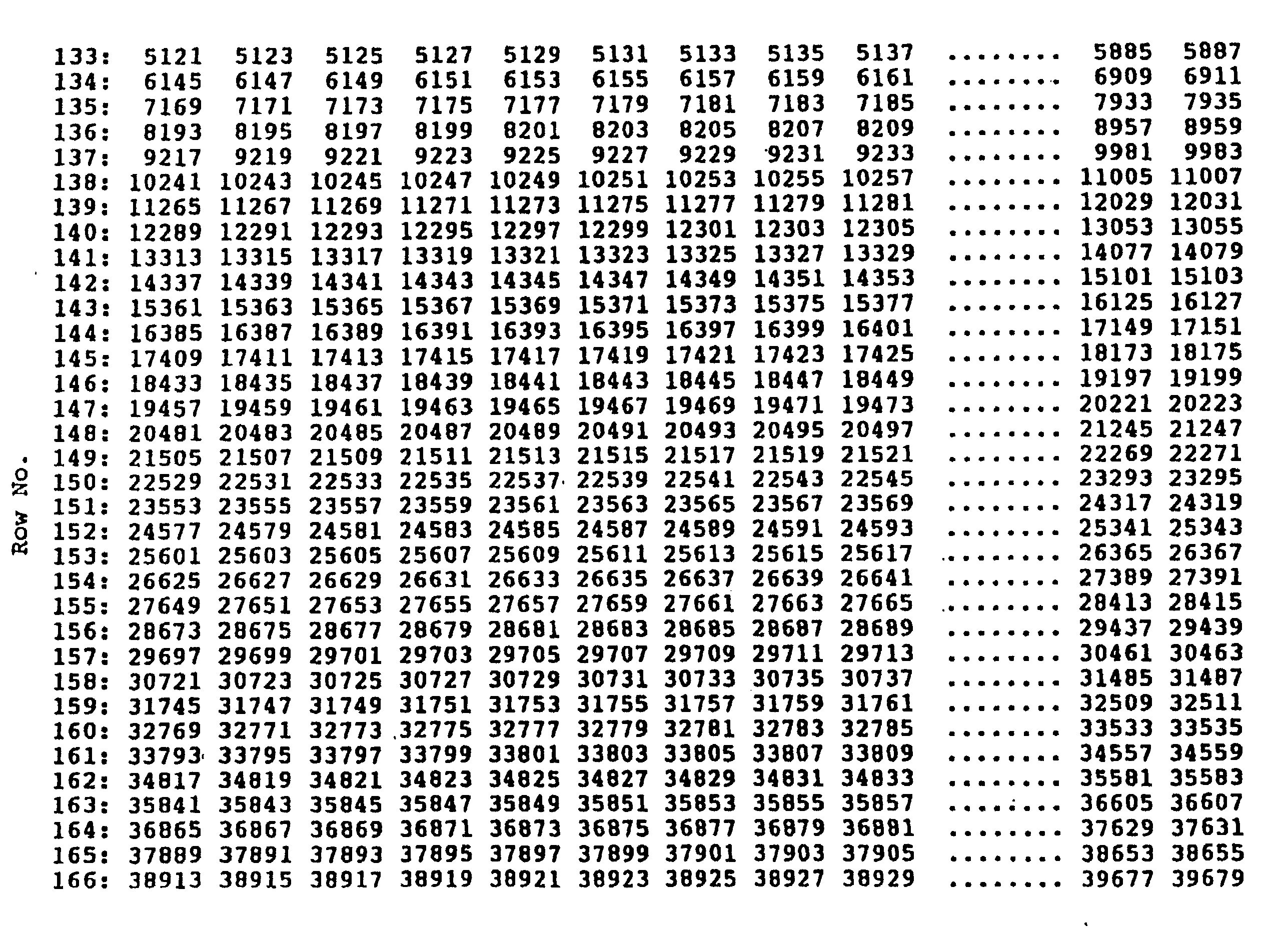

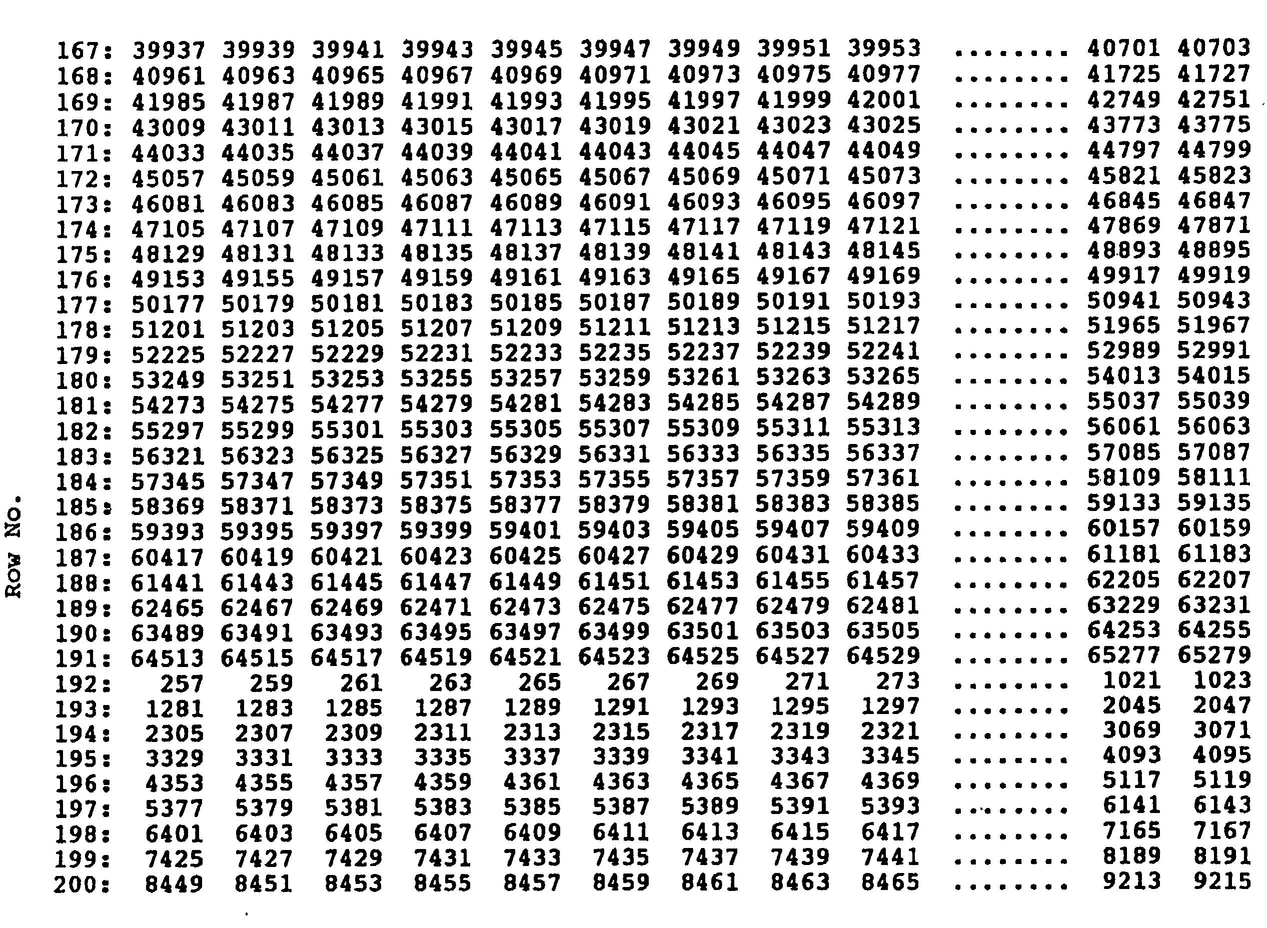

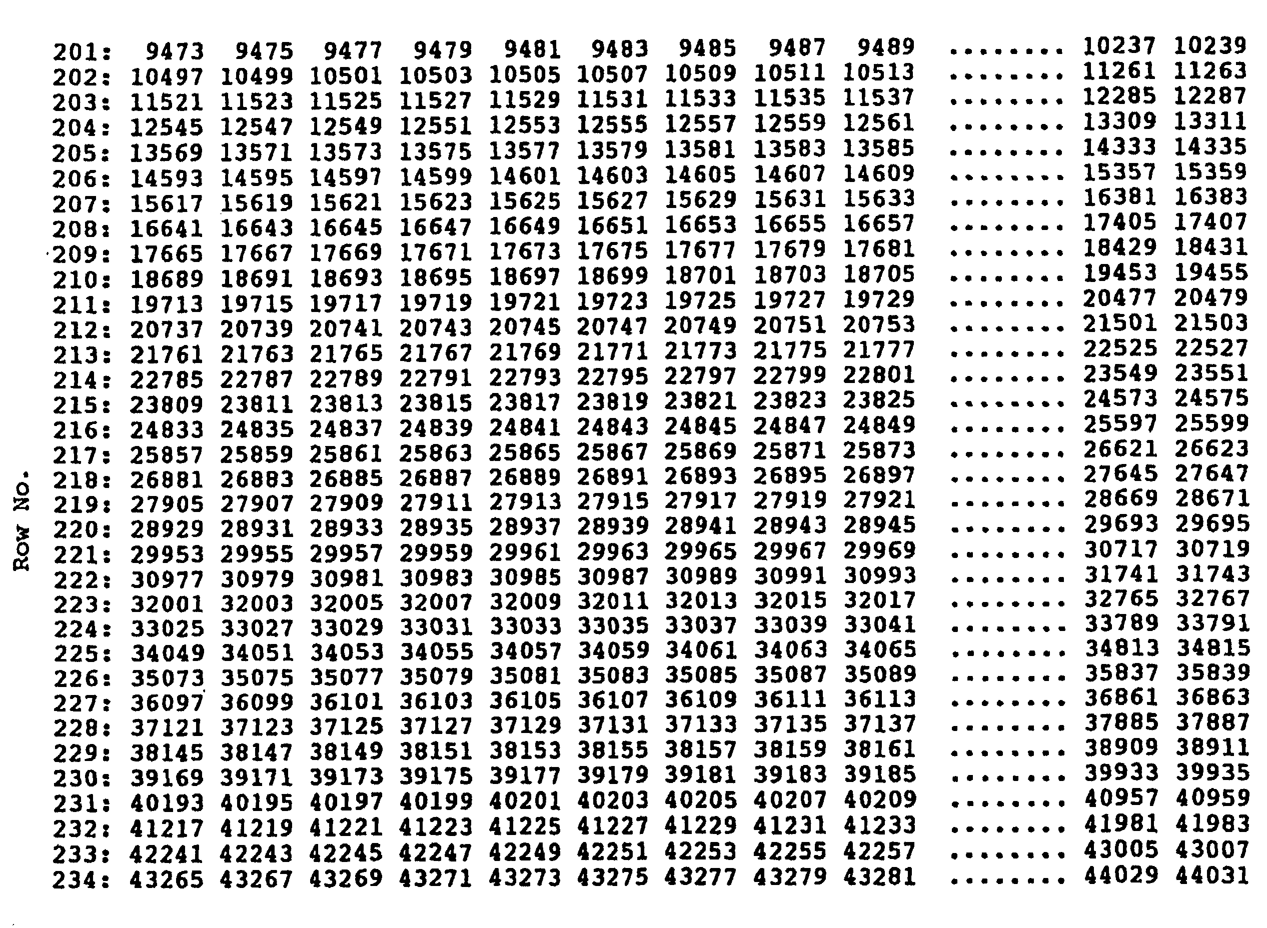

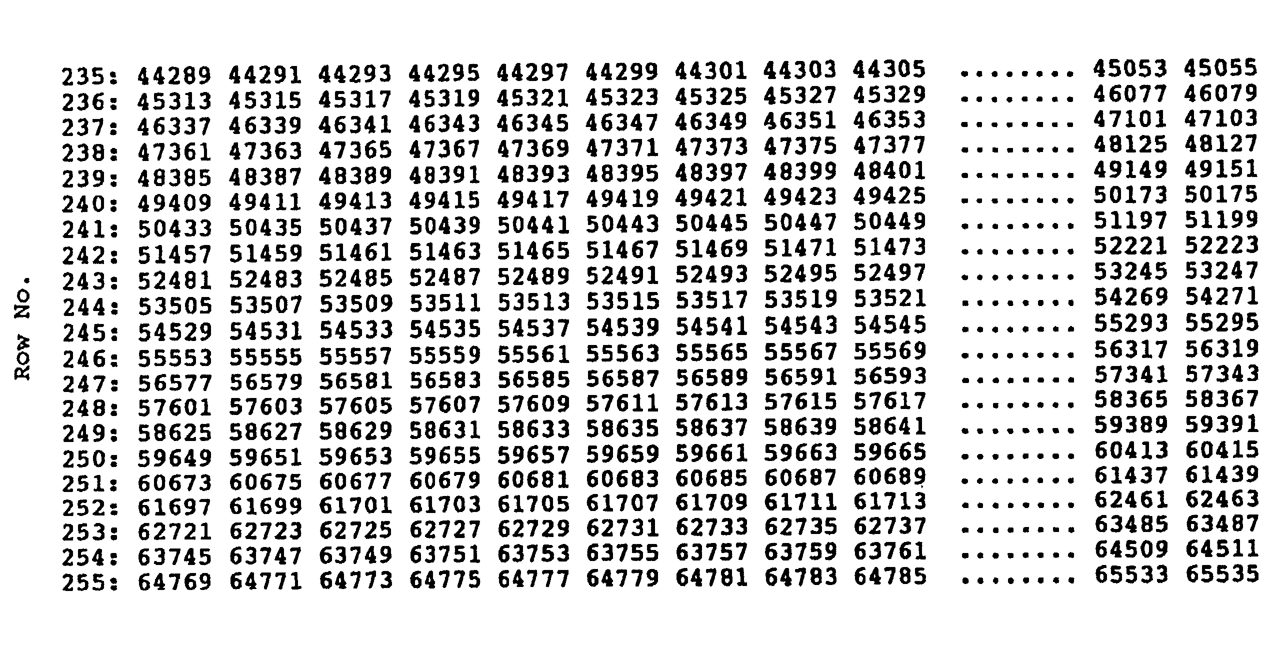

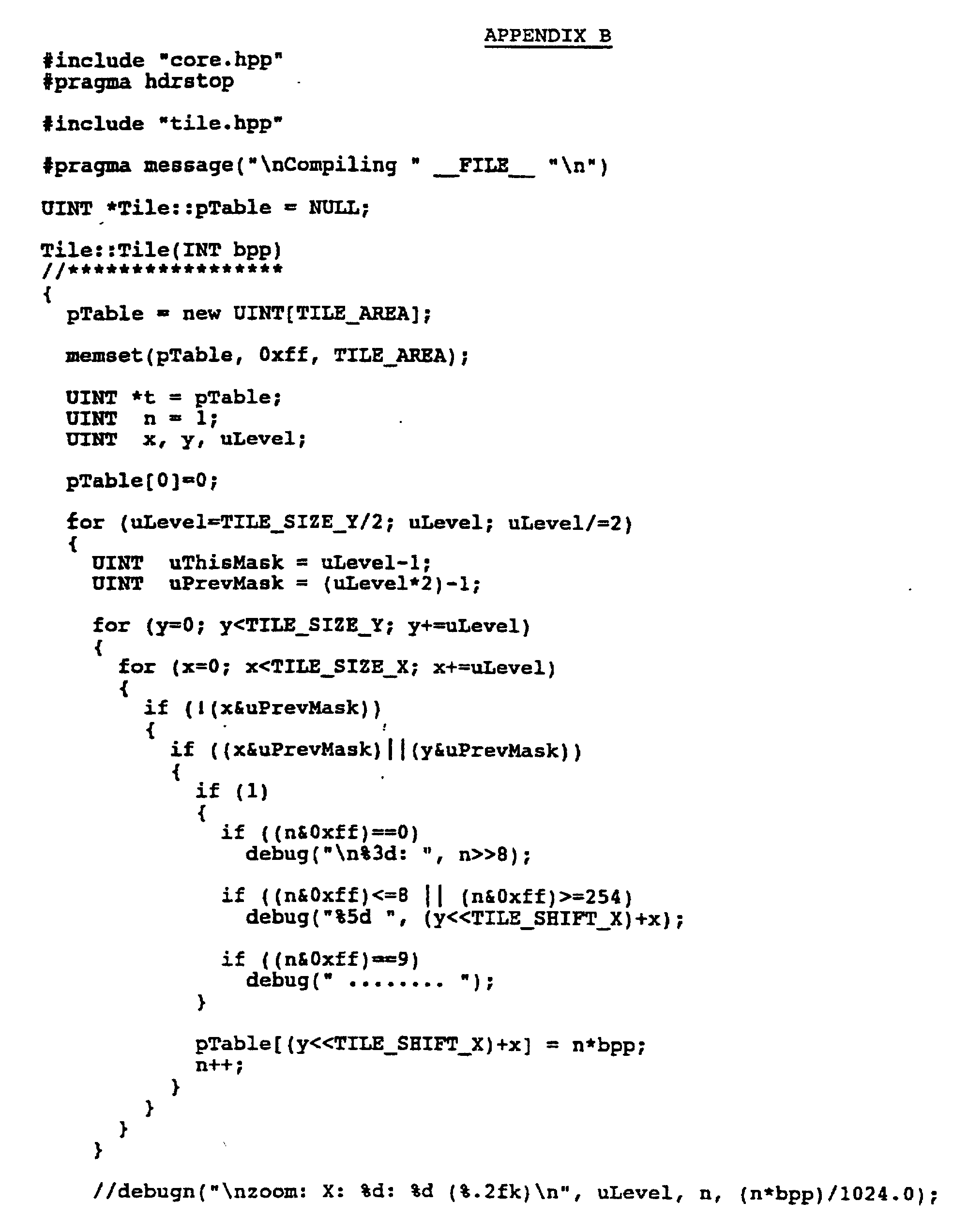

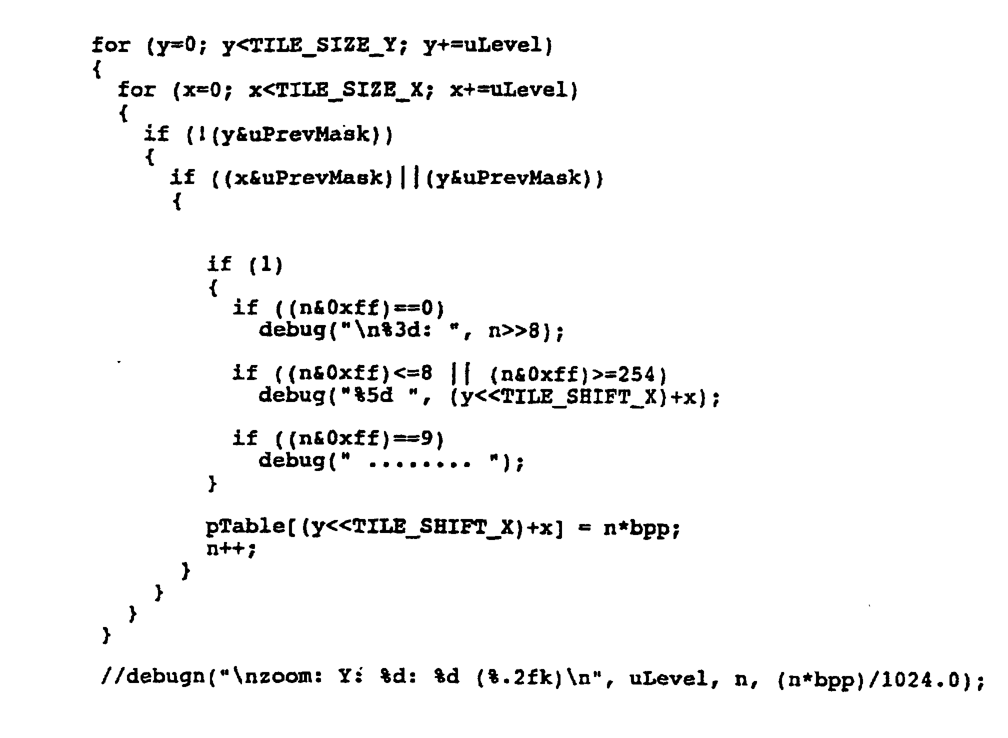

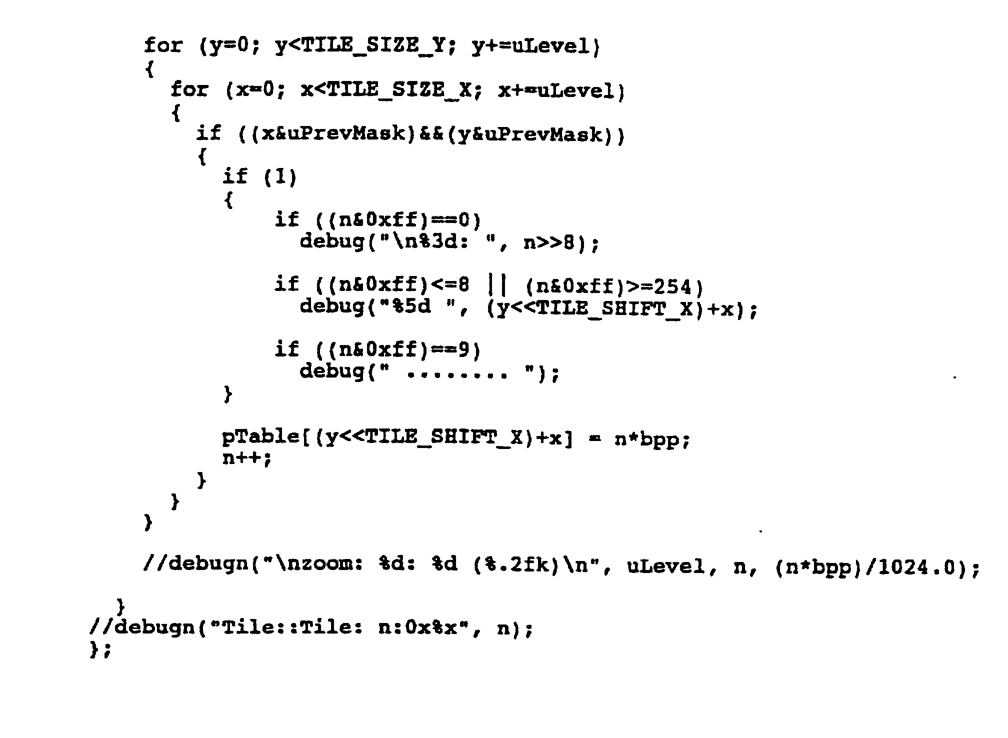

## Claims

1. A method of recording an array of data in a paged memory system, said array of data arranged as a plurality of tiles, each tile of said plurality of tiles consisting of 2^{M} x 2^{M} data values, M being a positive integer, and each data value therein represented by a pair of index co-ordinates, **characterized in that** said method comprises the steps of:
for each tile of said plurality of tiles, sub-sampling said data values of said each tile in increasing granularity comprising the further steps of:
determining a first set of data values having index pairs, wherein both indices of an index pair of each data value are multiples of 2^{M-1};
determining a plurality of sets of data values wherein each set is determined so that the respective set consists of data values having index pairs, wherein both indices are multiples of 2^{M-N-1}, but are not both multiples of 2^{M-N}, N being a positive integer, wherein said plurality of sets are arranged to have increasing granularity according to N equal to 1 to M-1, respectively; and
storing said each tile of said plurality of tiles as one or more pages, wherein each page consists of a number of sequential rows of said each tile.

2. The method according to claim 1, **characterized in that** said each tile is stored on a secondary storage device.

3. The method according to claim 2, **characterized in that** said secondary storage device is a disk storage device that is accessed by block transfers.

4. The method according to claim 1, **characterized in that** said array of data is stored on a virtual memory computer system.

5. The method according to claim 1, **characterized in that** said array of data is stored on a paged memory computer system.

6. Computer readable instructions to, when controlling a computer, implement the method of any preceding claim.

7. A computer readable medium carrying the compute readable instructions of claim 6.

## Patentansprüche

1. Verfahren zum Aufzeichnen eines Feldes von Daten in einem seitenweise angeordneten Speichersystem, wobei das Feld von Daten als eine Vielzahl von Platten angeordnet ist, wobei jede Platte der Vielzahl von Platten aus 2^{M} x 2^{M} Datenwerten besteht, wobei M eine positive Ganzzahl ist und jeder Datenwert darin durch ein Paar von Indexkoordinaten dargestellt ist, **dadurch gekennzeichnet, daß** das Verfahren die folgenden Schritte umfaßt:
für jede der Platte der Vielzahl von Platten, ein Unterabtasten der Datenwerte jeder Platte in einer zunehmenden Granularität, umfassend die weiteren Schritte:
Bestimmen eines ersten Satzes von Datenwerten mit Indexpaaren, wobei beide Indizes eines Indexpaares jedes Datenwertes das Vielfache von 2^{M-1} sind;
Bestimmen einer Vielzahl von Sätzen von Datenwerten, wobei jeder Satz so bestimmt wird, daß der jeweilige Satz aus Datenwerten mit Indexpaaren besteht, wobei beide Indizes Vielfache von 2^{M-N-1} sind, aber beide nicht Vielfache von 2^{M-N} sind, wobei N eine positive Ganzzahl ist, wobei die Vielzahl von Sätzen angeordnet ist, jeweils eine zunehmende Granularität gemäß N gleich 1 bis M - 1 aufzuweisen; und
Speichern jeder Platte der Vielzahl von Platten als eine oder mehrere Seiten, wobei jede Seite aus einer Anzahl von aufeinanderfolgenden Reihen jeder Platte besteht.

2. Verfahren nach Anspruch 1, **dadurch gekennzeichnet, daß** jede Platte in einer sekundären Speichereinrichtung gespeichert wird.

3. Verfahren nach Anspruch 2, **dadurch gekennzeichnet, daß** die sekundäre Speichereinrichtung eine Plattenspeichereinrichtung ist, auf die über Blocktransfers zugegriffen wird.

4. Verfahren nach Anspruch 1, **dadurch gekennzeichnet, daß** das Feld von Daten in einem virtuellen Speichercomputersystem gespeichert wird.

5. Verfahren nach Anspruch 1, **dadurch gekennzeichnet, daß** das Feld von Daten in einem seitenweise angeordneten Speichercomputersystem gespeichert wird.

6. Computerlesbare Befehle, um, wenn ein Computer gesteuert wird, das Verfahren jedweden voranstehenden Anspruchs zu implementieren.

7. Computerlesbares Medium, das die computerlesbaren Befehle des Anspruchs 6 enthält.

## Revendications

1. Procédé d'enregistrement d'un ensemble de données dans un système de mémoire par pages, ledit ensemble de données étant agencé selon une pluralité de carreaux, chaque carreau de ladite pluralité de carreaux étant constitué par 2^{M} x 2^{M} valeurs de données, M étant un entier positif, et chaque valeur de données dedans étant représentée par une paire de coordonnées d'index, **caractérisé en ce que** ledit procédé comprend les étapes de:
pour chaque carreau de la pluralité de carreaux, sous-échantillonnage desdites valeurs de données dudit chaque carreau en augmentant la granularité, comprenant les étapes supplémentaires de:
détermination d'un premier jeu de valeurs de données comportant des paires d'index telles que les deux index d'une paire d'index de chaque valeur de données sont des multiples de 2^{M-1};
détermination d'une pluralité de jeux de valeurs de données où chaque jeu est déterminé de telle sorte que le jeu respectif soit constitué par des valeurs de données comportant des paires d'index telles que les deux index sont des multiples de 2^{M-N-1} mais ne sont pas tous deux des multiples de 2^{M-N}, N étant un entier positif, les jeux de ladite pluralité de jeux étant respectivement agencés de manière à présenter une granularité croissante conformément respectivement à N égal à une valeur comprise entre 1 et M-1; et
stockage dudit chaque carreau de ladite pluralité de carreaux en tant qu'une page ou plusieurs pages, chaque page étant constituée par un nombre de rangées séquentielles dudit chaque carreau.

2. Procédé selon la revendication 1, **caractérisé en ce que** ledit chaque carreau est stocké sur un dispositif de stockage secondaire.

3. Procédé selon la revendication 2, **caractérisé en ce que** ledit dispositif de stockage secondaire est un dispositif de stockage sous forme de disque qui est accédé par transferts de blocs.

4. Procédé selon la revendication 1, **caractérisé en ce que** ledit ensemble de données est stocké sur un système d'ordinateur à mémoire virtuelle.

5. Procédé selon la revendication 1, **caractérisé en ce que** ledit ensemble de données est stocké sur un système d'ordinateur à mémoire par pages.

6. Instructions lisibles par ordinateur pour, lors de la commande d'un ordinateur, mettre en oeuvre le procédé selon l'une quelconque des revendications précédentes.

7. Support d'information lisible par ordinateur qui est porteur des instructions lisibles par ordinateur selon la revendication 6.
